# EUROPEAN PATENT APPLICATION

(11) **EP 1 953 992 A1**
(43) Date of publication of application: **06.08.2008**
(21) Application number: 07003166.1
(22) Date of filing: 14.02.2007
(51) Int. Cl.: H04L 29/06

(54) **Registration update in mobility anchor point in mixed network- and host-based mobility management**

(30) Priority: 30.01.2007 EP 07001999
(71) Applicant: MATSUSHITA ELECTRIC INDUSTRIAL CO., LTD., Osaka 571-8501 (JP)
(72) Inventor: Velev, Genadi, 63225 Langen (DE); Weniger, Kilian, Dr., 63225 Langen (DE); Bachmann, Jens, 63225 Langen (DE); Schuringa, Jon, Dr., 63225 Langen (DE)
(74) Representative: Grünecker, Kinkeldey, Stockmair & Schwanhäusser Anwaltssozietät

(57) **Abstract**

In mobile data network scenarios are possible where different mobility management schemes, such as host-based and network-based, are applied to the same mobile node. In case of host-based mobility, the mobile node (MN) sends message (called binding updates) for registration of a new location to the mobility anchor. In case of network-based mobility, the registration message is sent by a proxy mobility agent (PMA) on behalf of the MN. Since the registration messages are sent by different entities, they may suffer by various delay conditions and may arrive re-ordered at the mobility anchor node (called home agent, HA). This is called race condition between registration messages. If the both entities, MN and PMA, sending registration message are not synchronized or use different criteria for comparison of the messages' freshness, the HA cannot decide which message has been sent most currently. To avoid this problem, a new mechanism in the mobility anchor node is introduced. This mechanism first detects whether race condition between registration messages occur and second resolves the most recent location of the mobile node, as both sending sources of registration messages are polled by using standard Mobile IP procedures.

## Description

### FIELD OF THE INVENTION

The invention relates to inter-working of network-based and host-based mobility management in packet-based communication networks.

### BACKGROUND OF THE INVENTION

Communications systems evolve more and more towards an Internet Protocol (IP)-based network. They consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, from now on called Mobile Node (MN), and moves between subnets, it must change its IP address to a topological correct one because of the hierarchical addressing scheme of the Internet Protocol (IP). However, since connections on higher-layers such as TCP connections are defined with the IP addresses (and ports) of the communicating nodes, the connection breaks if one of the nodes changes its IP address, e.g., due to movement.

Mobile IPv6 (D. Johnson, C. Perkins, J. Arkko, "Mobility Support in IPv6", RFC 3775, June 2004) is an IP-based mobility protocol that enables MNs to move between subnets in a manner transparent for higher layers and applications, i.e. without breaking higher-layer connections. Therefore, a MN has two IP addresses configured: a Care-of-Address (CoA) and a Home Address (HoA). The MN's higher layers use the HoA for communication with the communication partner (destination terminal), from now on called Corresponding Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Reasons for having a set of HAs instead of a single HA are redundancy and load balancing..

Mobile IPv6 currently defines two modes of operation: bi-directional tunnelling and route optimization. If bi-directional tunnelling is used, data packets sent by the CN and addressed to the HoA of the MN are intercepted by the HA in the HN and tunnelled to CoA of the MN. Data packets sent by the MN are reverse tunnelled to the HA, which decapsulates the packets and sends them to the CN. For this operation, the HA must be informed about the CoA of the MN. Therefore, the MN sends a registration message (further called Binding Update, BU) messages to the HA. These messages are sent over an IPsec security association and thus are authenticated and integrity protected. However, if the MN is far away from the home network and the CN is close to the MN, the communication path is unnecessarily long, resulting in inefficient routing and high packet delays The Mobile IPv6 route optimization mode can prevent the inefficiency of bi-directional tunnelling mode by using the direct path between CN and MN. Therefore, the MN sends BU messages to the CN, which then is able to directly send data packets to the MN (a type 2 routing header is used to send the packets on the direct path). Of course, the CN has to implement Mobile IPv6 route optimization support. To authenticate the BU message, the MN and the CN perform a so-called return routability procedure, which tests the reachability of the MN at the HoA and CoA and generates a shared session key.

Mobile IP is categorized as host-based (or client-based) mobility management, since the mobility-related signalling is between the host and the HA. Hence, it is sometimes called Client Mobile IP (CMIP). Another approach becoming popular in various standardization organizations is a network-based approach for IP mobility management. One main characteristic of network-based mobility is that the access network entities are appropriately configured to detect the MN movement and to exchange information about the current location of the MN, so that the MN does not need to be involved in the mobility process. Therefore the mobility-related signaling over the wireless interface is avoided. Another advantages of the network-based mobility management are like less packet overhead over the air, since no MIPv6 encapsulation is needed, and mobility support for simple IP nodes (i.e., non-MIP-capable nodes). The network-based mobility is well applicable to geographically limited, i.e. local, movements of the MN.

The Internet Engineering Task Force (IETF), the standard organization developing Internet protocols, develops specifically, in this area, the network-based localized mobility management (NetLMM). It is working on such approach for localized mobility management based on the Mobile IP protocol. Since a network entity is acting as a proxy on behalf of the MN, the protocol is called Proxy Mobile IP (PMIP). There is a variant for IPv6 called PMIPv6 (S. Gundavelli, K. Leung, V. Devarapalli, K. Chowdhury, "Proxy Mobile IPv6", draft-sgundave-mip6-proxymip6-01, Jan 2007) and a variant for IPv4 called PMIPv4 (K. Leung, G. Dommety, P. Yegani, K. Chowdhury, Mobility Management using Proxy Mobile IPv4, draft-leung-mip4-proxy-mode-02.txt, Jan 2007. This invention assumes PMIPv6 as protocol for network-based mobility management, but the invention is not limited to PMIPv6. It may also be applicable to other network-based mobility management protocols such as PMIPv4.

PMIPv6 introduces a new logical entity called Proxy Mobile IP Agent (PMA), which is co-located with the access router (AR) and which sends BU messages on behalf of a MN. These BU messages are marked with a flag, so that they can be identified as Proxy BU (PBU) messages. Furthermore, PBU messages contain a Network Access Identifier (NAI) option, a home prefix option, and a timestamp option. The NAI option contains the NAI [RFC4282], which has the form of "username@realm" and which is used to identify a MN. The home prefix option contains the HoA or home prefix of the MN. In the so-called per-MN-prefix addressing model, every MN has a unique home prefix and the MN's global IP address(es) is configured based on this prefix. The unique home prefix can be used in the PBU messages instead of a HoA. The timestamp option contains the time the PBU has been sent by the PMA and is used by the HA to identify the freshness of the PBU messages. The sequence number value of the PBU message is not considered by the HA for determining the sequence of PBUs because the PMAs do not synchronize the sequence number they use for the PBUs.

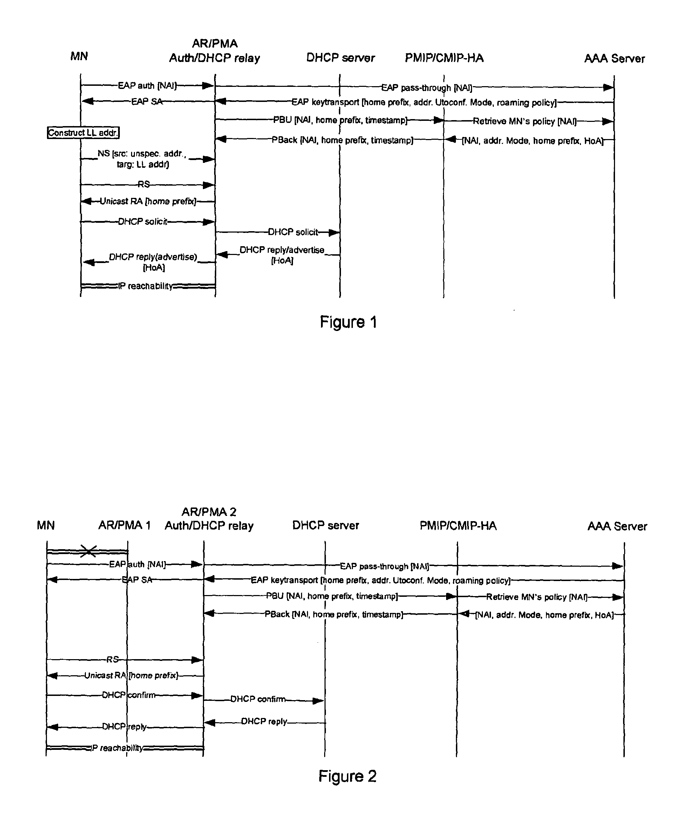

When a MN attaches to a new PMA, it authenticated with the network using the EAP framework [RFC3748] and an EAP method such as EAP-AKA [RFC4187]. The PMA typically acts as pass-through authenticator and forwards the EAP packets to the AAA server/infrastructure related to the MN. The MN uses a NAI as identifier. If the network authentication is successful, the PMA obtains the MN's profile from the AAA server including the MN's home prefix. The PMA then sends a PBU to the HA and announces the home prefix to the MN. After the MN authenticates with the AR, it starts the IP configuration, i.e. it configures a link-local (LL) IP address, performs Duplicate Address Detection (DAD) for the LL address sending a Neighbour Solicitation (NS) message to the solicited-node multicast address of the LL address to be checked. If the procedure is successful, the MN sends Router Solicitation (RS) message to all-routers multicast address and waits for receiving a Router Advertisement (RA). The AR/PMA responds with unicast RA including the MN's home prefix. In this invention, it is assumed that the MN applies statefull address configuration scheme, meaning that Dynamic Host Configuration Protocol (DHCP) is used. The MN learns that DHCP is to be used from the received unicast RA message, in which the "M" flag is set. Consequently, the MN sends DHCP solicit message, which is captures by the AR/PMA acting as DHCP relay agent. The DHCP relay forwards this message to the DHCP server, which answers with DHCP reply or advertise message including the MN's home address (HoA). After the MN receives the DHCP advertise message, the MN configures the advertised HoA as its global IP address. Consequently, the MN is reachable and thinks it is at home as long as it moves within the PMIP domain. An exemplary signalling flow for PMIPv6 during initial attachment procedure as described in this paragraph is shown in Figure 1.

Figure 2 shows the signalling flow in case of handover between PMAs within the same PMIP domain. When the MN moves to the area of AR/PMA 2, it starts the authentication procedure as described in Figure 1. After the PMA2 receives the EAP keytransport message, it can start the registration process with HA sending PBU [NAI, home prefix, timestamp]. After the MN has successfully authenticated with PMA2, it starts checking if the current IP configuration is still valid, i.e. MN sends a RS message. AR/PMA2 responds with RA having "M" flag set for using DHCP for address configuration. Following, the MN sends DHCP confirm message, which is intercepted by the AP/PMA2 acting as DHCP relay entity. The DHCP reply message sent by the DHCP server confirms that the previously configured HoA can still be used. After the DHCP procedure is completed, the MN is again IP connected and can send/receive data packets.

The functionality of a HA for MIPv6 as defined in RFC3775 is re-used to a large extent, but some changes are necessary to support PMIPv6. Henceforth, a HA as defined in RFC3775 is called CMIP-HA and a HA as defined in (S. Gundavelli, K. Leung, V. Devarapalli, K. Chowdhury, "Proxy Mobile Ipv6", draft.agundave-mip6-proxymip6-01, Jan 2007) is called PMIP-HA. For instance, a major difference is how the freshness of BU/PBU messages is determined by the HA. A CMIP-HA identifies the freshness of a BU message based on the sequence number in the BU, whereas a PMIP-HA identifies the freshness of a PBU messages based on the timestamp in the timestamp option in the PBU. A PMIP-HA does not consider the sequence number value in PBU messages.

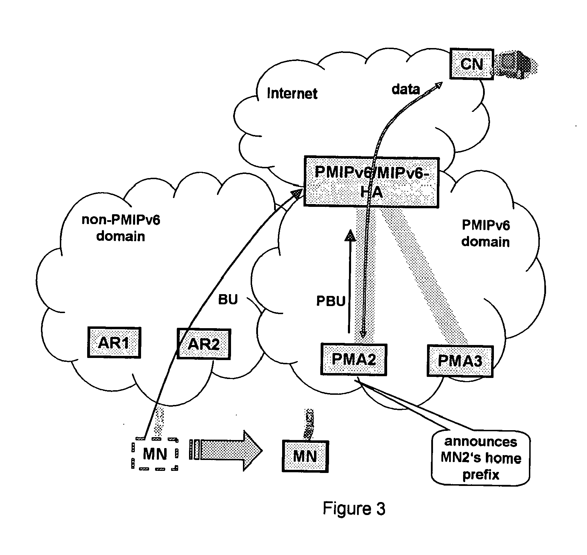

A possible scenario containing co-located PMIP-HA and a CMIP-HA (further in the invention such CMIP/PMIP-HA is simply called HA) is shown on Figure 3. In the figure, PMIPv6 is used for localized mobility management in the home operator network and CMIPv6 for global mobility management if the MN roams in other networks. The HA maintains a database where the MN's CoAs are registered. These registrations are based on the BU and PBU messages send correspondingly by MN or PMAs. This database is further called Binding Cache Entry (BCE).

The BU and PBU messages contain different CoAs, however, both are bound to the same HoA. If the HA does not implement a mechanism for separating different IP flows destined to the same HoA among different CoAs (such mechanism is known as multi-homing), the HA needs to have only one active binding of HoA and CoA, so that the HA unambiguously knows to which CoA the data packets are forwarded. Since the BU and PBU messages contain different CoAs, the HA needs to decide which message, correspondingly which CoA, is the current one.

As described above, the binding updates sent by mobile node (in case of client-based mobility and called for simplicity CBU for client-BU) and proxy mobile agent (in case of network-based mobility and called for simplicity PBU for proxy-BU) are compared for freshness based on different conditions. The client binding update contains sequence number, which is increased each time a new binding update is sent. The proxy binding update contains a timestamp denoting the sending time in the receiver. Having this, the home agent cannot compare which of both binding updates is sent more recently. Further in this invention this situation is called binding update race condition because the home agent cannot conclude on the freshness of the binding update based on the consequence of binding update arrival, since the binding updates are propagated over different routes.

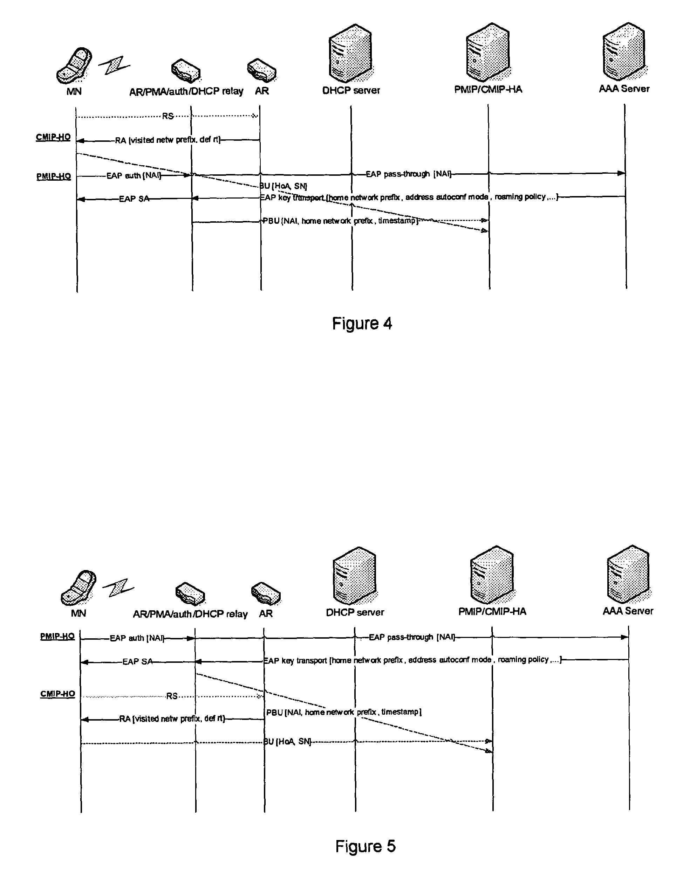

If re-ordering of the binding updates occurred and the home agent falsely accepts an older binding update, the data packets to the mobile node would be routed to the old mobile node's location, i.e. the packets would be lost. Scenarios, in which the BU and PBU arrive re-ordered in the HA are shown in Figure 4 and Figure 5. Figure 4 shows a case where the MN moves from CMIP-based mobility to a PMIP-based mobility mechanism and where the BU sent by the MN arrives later in the HA than the PBU sent by the PMA. Analogically, Figure 5 shows the transition from PMIP-based mobility to a CMIP-based mobility mechanism and where the PBU sent by the PMA arrives later in the HA than the BU sent by the MN.

### SUMMARY OF THE INVENTION

An object of the invention is to provide a method to resolve a race condition at a mobility anchor point in mixed network-based and host-based mobility management.

Another object of the invention is to ensure that a mobility anchor point, upon receiving two binding updates, always accepts the most recent binding update.

At least one of these objects is solved by the subject matter of the independent claims. Advantageous embodiments are subject matter of the dependent claims.

An aspect of the invention is to introduce an algorithm in the home agent for detection and resolution of race condition of binding updates sent by network-based and client-based mobility mechanism in case that CMIP-HA and PMIP-HA are co-located in a single HA. The HA first needs to detect the change of mobility mechanism for a given MN. This detection of the change of mobility mechanism (i.e. CMIP to PMIP or PMIP to CMIP) is based on the consecutive reception of binding updates of different types, i.e. if the HA receives CBU after PBU or PBU after CBU. This is a first sign that a binding update race condition may occur.

Further, the HA may implement additional mechanisms to refine the detection of BU race condition. According to an embodiment of the invention, the HA may measure the time difference between the respective arrival times of the binding updates of different types. If this time is shorter than a given time limit, i.e. the binding updates arrive suspiciously close after each other, the HA may conclude that a race condition between binding updates occurred. If the HA doubts about a race condition, the HA rejects the last BU and, as a result, it sends a BU resolution query message, e.g. a binding acknowledgement with Refresh Advise option set to 0, which is denoted BAck[Refr-Adv-Opt=0], to both CoAs, the CoA in the binding cache entry and the CoA in the last BU. Later, the HA receives only one BU resolution reply message (CBU or PBU) from the current MN's location and processes this BU in a usual way.

An embodiment of the invention provides a method for managing the mobility of a mobile node at a mobile anchor point, said mobile node moving between a first network and a second network, wherein said first network uses a mobile node-based mobility management scheme for managing the mobility of the mobile node, and said second network uses a network-based mobility management scheme for managing the mobility of the mobile node, said mobile anchor point implementing both the mobile node-based mobility management scheme and the network-based mobility management scheme, said method comprising the steps executed by the mobile anchor point of receiving a first message from the mobile node on a first location of the mobile node in the first network, where the mobile node has a first IP address, receiving a second message from a network element in the second network on a second location of the mobile node in the second network, where the mobile node has a second IP address, transmitting a binding request message to at least one of the first and second IP address of the mobile node, receiving a response message for the at least one of the first and second IP address, and determining which one of the first and second IP address is a current IP address of the mobile node based on the received response message.

Another embodiment of the invention provides a method for managing the mobility of a mobile node at a mobile anchor point, said mobile node moving between a first network and a second network, wherein said first and second network use a network-based mobility management scheme for managing the mobility of the mobile node, said mobile anchor point implementing the network-based mobility management scheme, said method comprising the steps executed by the mobile anchor point of receiving a first message from a first network element in the first network on a first location of the mobile node in the first network, where the mobile node has a first IP address, receiving a second message from a second network element in the second network on a second location of the mobile node in the second network, where the mobile node has a second IP address, transmitting a binding request message to at least one of the first and second IP address of the mobile node, receiving a response message for the at least one of the first and second IP address, and determining which one of the first and second IP address is a current IP address of the mobile node based on the received response message.

Another embodiment of the invention provides a mobile anchor point for managing the mobility of a mobile node, said mobile node moving between a first network and a second network, wherein said first network uses a mobile node-based mobility management scheme for managing the mobility of the mobile node, and said second network uses a network-based mobility management scheme for managing the mobility of the mobile node, said mobile anchor point implementing both the mobile node-based mobility management scheme and the network-based mobility management scheme, and said mobile anchor point comprising receiving means for receiving a first message from the mobile node on a first location of the mobile node in the first network, where the mobile node has a first IP address, and a second message from a network element in the second network on a second location of the mobile node in the second network, where the mobile node has a second IP address, and transmitting means for transmitting a binding request message to at least one of the first and second IP address of the mobile node, wherein said receiving means are adapted to receive a response message for the at least one of the first and second IP address, and said mobile anchor point further comprises determining means for determining which one of the first and second IP address is a current IP address of the mobile node based on the received response message.

Yet another embodiment of the invention provides a mobile anchor point for managing the mobility of a mobile node, said mobile node moving between a first network and a second network, wherein said first and second network use a network-based mobility management scheme for managing the mobility of the mobile node, said mobile anchor point implementing the network-based mobility management scheme, and said mobile anchor point comprising receiving means for receiving a first message from a first network element in the first network on a first location of the mobile node in the first network, where the mobile node has a first IP address, and a second message from a second network element in the second network on a second location of the mobile node in the second network, where the mobile node has a second IP address, and transmitting means for transmitting a binding request message to at least one of the first and second IP address of the mobile node, wherein said receiving means are adapted to receive a response message for the at least one of the first and second IP address, and said mobile anchor point further comprises determining means for determining which one of the first and second IP address is a current IP address of the mobile node based on the received response message.

Another embodiment of the invention provides a mobile node moving between a first network and a second network, wherein said first network uses a mobile node-based mobility management scheme for managing the mobility of the mobile node, and said second network uses a network-based mobility management scheme for managing the mobility of the mobile node, said mobile node comprising transmitting means for transmitting to a mobile anchor point for the mobile node a message on a location of the mobile node in the first network, where the mobile node has a first IP address, and receiving means for receiving from the mobile anchor point a binding request message for the first IP address of the mobile node, wherein said transmitting means are adapted to transmit to the mobile anchor point a response message to the received binding request message.

Another embodiment of the invention provides a network element in a network using a network-based mobility management scheme for managing the mobility of a mobile node, said network element comprising transmitting means for transmitting to a mobile anchor point for the mobile node a message on a location of the mobile node in the network, where the mobile node has an IP address, and receiving means for receiving from the mobile anchor point a binding request message for the IP address of the mobile node, wherein said transmitting means are adapted to transmit to the mobile anchor point a response message to the received binding request message.

### BRIEF DESCRIPTION OF THE FIGURES

**Figure 1**: Exemplary signaling flow for PMIPv6 during initial attachment;
**Figure 2**: Exemplary signaling flow for PMIPv6 during handover from a CMIP-based network domain into a PMIP-based network domain (CMIP to PMIP mobility transition);
**Figure 3**: Co-located PMIP/CMIP-HA scenario;
**Figure 4**: Example of BU race condition in a CMIP to PMIP mobility transition;
**Figure 5**: Example of BU race condition in a PMIP to CMIP mobility transition;
**Figure 6**: Solution of the BU race condition scenario in a CMIP to PMIP mobility transition;
**Figure 7**: Solution of the BU race condition scenario in a PMIP to CMIP transition;
**Figure 8**: Example of detection of BU race condition although the arrival of BU's is correct (in order);
**Figure 9**: &Exemplary flow chart in the PMA showing the processes (also the optional ones) needed to support the *resolution of freshest BU* procedure.

### DETAILED DESCRIPTION OF THE INVENTION

In the following description, the following terms will be construed as having the following definitions.

A Binding Update (BU) is herewith defined as a registration message sent by a mobile node or proxy mobility agent (PMA) to notify the mobility anchor point (HA) about the new address (i.e. topological location) of the MN. In this invention, we differentiate between BUs send by the MN in host-based mobility mechanism, called further CBU for client-BU, and BUs send by the PMA in network-based mobility mechanism, called further PBU for proxy-BU. Analogically, a binding update acknowledgement message sent by the host is indicated as CBAck (client-BAck) and binding update acknowledgement message sent by the PMA is indicated as PBAck (proxy-BAck).

A BU race condition herewith refers to a situation, in which a CBU or a PBU message gets delayed, and as consequence an old (P)BU is reaching the HA after a fresher (P)BU.

CMIP (client Mobile IP) refers to a host-based mobility mechanism. The client (host or mobile node, MN) sends registration messages to the mobility anchor node (home agent, HA) in order to register its new location.

PMIP (proxy Mobile IP) refers to a network-based mobility mechanism founded on the Mobile IP protocol (D. Johnson, C. Perkins, J. Arkko, "Mobility Support in IPv6", RFC 3775, June 2004). The proxy mobile agent (PMA) sends registration messages on behalf of the MN to the mobility anchor node (HA) in order to register the MN's new location. In PMIP mechanism the MN is not involved in the mobility-related procedures.

The solution according to an embodiment of the invention can be separated into 2 phases. During the first phase the HA detects the possibility of BU race condition. This phase is further called *BU race condition detection* procedure. During the second phase, after the HA has detected the possibility of BU race condition, the HA needs to resolve which of both BUs is fresher. This is further called *resolution of the freshest BU* procedure.

The following terms will be used in the description of the invention, the definition of which is given in the following.

A BU resolution query message designates a message sent by the HA to resolve the freshest (i.e. the most current) BU in case that BU race condition occurred. This message could be a binding update acknowledgement with Refresh Advise option or an Internet Control Message Protocol (ICMP) echo message or a Care-of Test Init (CoTI) message or some other message.

A BU resolution reply message designates a message sent by the MN or by the PMA as reply to BU resolution query message. This message could be a binding update or a proxy binding update message or ICMP echo reply message or Care-of Test (CoT) message or some other message.

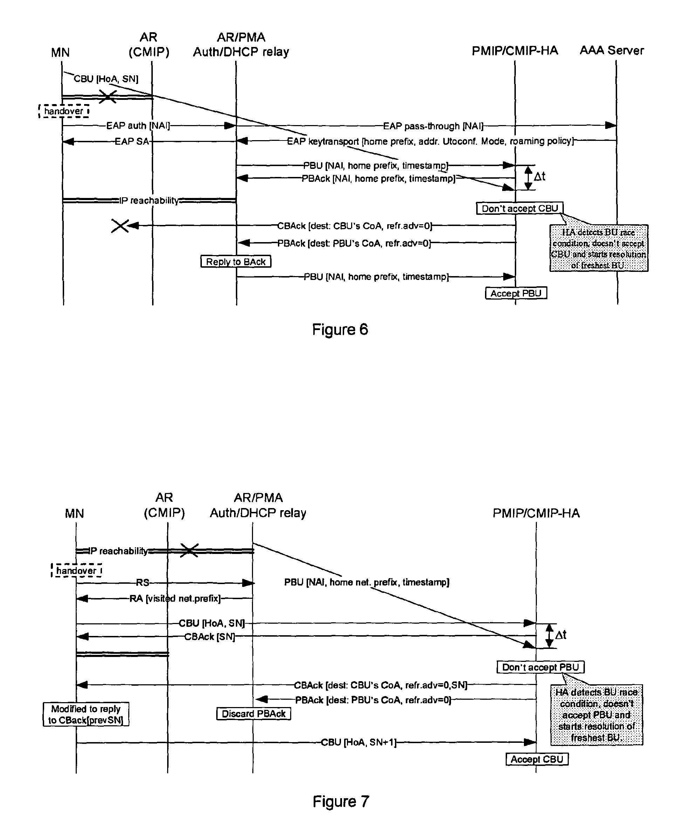

The *BU race condition detection* procedure is mainly based on the detection of the change of used mobility mechanism, i.e. the transition from client-based (CMIP) to network-based (PMIP) mobility or vice versa. The HA can detect this transition by the consecutive reception of BUs of different types, e.g. reception of CBU after having received PBU or reception of PBU after having received CBU. If the HA would start the *resolution of freshest BU* procedure every time a transition of the mobility mechanism is detected, this would result in unnecessary signalling in the network and unnecessary delay in the processing of the binding updates in the HA. Therefore, according to a preferred embodiment of the invention, the *BU race condition detection* procedure is refined and an additional more precise condition for the *BU race condition detection* is introduced by having the HA monitoring and storing the time when BUs of different types arrive. If the arrival of consecutive BUs of different types is within a pre-configured time-span (further the time-span is denoted by "T"), this means that the BUs of different types are sent very shortly after each other, then the possibility of BU re-ordering is considerable. In this case the HA triggers *resolution of freshest BU* procedure. Let us assume the measured time difference Figure 7). Now, if the condition that Δt is smaller/shorter then the pre-configured time-span T (i.e. Δt < T) is fulfilled, then HA starts the *resolution of freshest BU* procedure.

The configuration of the time-span T can be done manually by the network operator or it can be determined dynamically. For example the operator may know how long is the handover procedure between a foreign and home network (or CMIP-based to PMIP-based mechanisms) or it knows the minimum time needed for handover between different network domains. So, the arrival of a consecutive BUs of different types cannot be shorter than the minimum handover delay. If the time is shorter, then something suspicious happened and the HA doubts about the correct consequence of arrival of BUs. In this case the parameter T is configured based on the minimum handover delay for CMIP-to-PMIP (or vice versa) mobility transition plus or minus some guard time. However, if the MN performs pre-authentication and pre-authorisation (meaning that the MN performs the EAP procedures with the new network domain before the L2 handover), then the parameter T needs to be set up appropriately, i.e. to consider that the BUs of different type may be sent shortly after each other. Note that the parameter T is an additional condition for *BU race condition detection* procedure and its configuration is implementation-specific. If the HA detected a BU race condition, the next step is to perform *resolution of the freshest BU* procedure. During this procedure the HA rejects the last received BU (CBU or PBU, further called C/PBU) and sends BU resolution query message (e.g. binding acknowledgement with Refresh Advise option set to 0, BAck[Refr-Adv-Opt=0]) to both CoAs. The first CoA is taken from the current binding cache entry (BCE) meaning that this is the address being already registered by the previous C/PBU. The second CoA is contained in recent C/PBU, which has just been rejected. As a respond to BU resolution query message, the HA receives only one BU resolution reply message (e.g. C/PBU) from the current MN's location, i.e. from the freshest CoA, and updates its BCE correspondingly.

Figure 6 shows an exemplary solution of the BU race condition scenario in CMIP-to-PMIP mobility transition. An older CBU sent by the MN arrives at the HA later than a fresher PBU sent by the PMA. Since the time difference (Δt) of the arrival of PBU and CBU is smaller than the pre-configured time parameter T, the HA detects a possibility of BU race condition. Therefore the HA doesn't accept the CBU and initiates the *resolution of freshest BU* procedure. One option for the HA is to delete the CBU, but another option (as it is shown later in the description in the part where the HA receives de-registration message before receiving BU resolution reply message) is to store the information of the CBU, since the HA may take a decision for updating the BCE before the reception of BU resolution reply message. As a consequence of detecting BU race condition, the HA sends CBAck[Refr-Adv-Opt=0] to the MN and PBAck[Refr-Adv-Opt=0] to the PMA. The CBAck[Refr-Adv-Opt=0] to the MN cannot be received, so no reply would come from the MN. After the reception of PBAck[Refr-Adv-Opt=O] the PMA responds immediately with a PBU to the HA. When the HA receives the PBU, it updates its BCE. In this case it means that the BCE is not changed, just the lifetime timer in the BCE is updated.

Figure 7 shows an exemplary solution of the BU race condition scenario in PMIP-to-CMIP mobility transition. An older PBU sent by the PMA arrives at the HA later than a fresher CBU sent by the MN. Again if the condition Δt < T is fulfilled, the HA initiates the *resolution of freshest BU* procedure. HA sends CBAck[Refr-Adv-Opt=0] to the MN and PBAck[Refr-Adv-Opt=0] to the PMA. The PBAck[Refr-Adv-Opt=0] to the PMA is received, but the PMA discards the message because MN is not anymore present in the PMA's mobility registration database. On the other hand, after the reception of CBAck[Refr-Adv-Opt=0] message, the MN responds immediately with a CBU to the HA. When the HA receives the CBU, it updates its BCE. In this case it means that the BCE is not changed, just the lifetime timer in the BCE is updated.

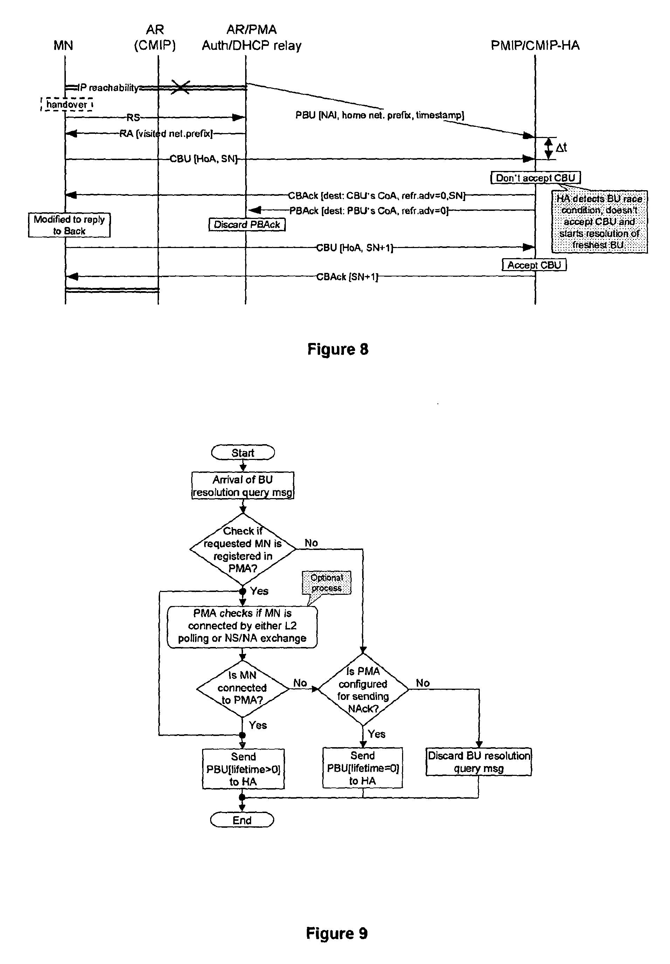

As it is described in the previous paragraphs, a refinement of the detection of BU race condition is based on the time difference of the arrival of consecutive BUs of different types. In contrast to Figure 7, it is also possible that BUs arrive in-order, however, in a very short time after each other. Such case is depicted in Figure 8 where MN performs PMIP to CMIP handover. The PBU arrives shortly before the CBU (i.e. Δt < T). Having this condition, the *resolution of freshest BU* procedure will be activated although the BUs arrived correctly (in-order). The resulting behaviour is that the HA doesn't accept the latest BU (i.e. CBU) and sends CBAck[Refr-Adv-Opt=0] to MN and PBAck[Refr-Adv-Opt=0] to PMA. The PMA discards the PBAck[Refr-Adv-Opt=0] message, since the MN is not any more attached to it. After the reception of CBAck[Refr-Adv-Opt=0], the MN responds immediately with a CBU[SN+1] to the HA. The denotation CBU[SN+1] means that the sequence number in the client-BU is increased by one. When the HA receives the CBU, it accepts the CBU and updates its BCE, as the corresponding proxy-BCE for this MN is de-activated (or deleted depending on the implementation). The HA may send CBAck back to the MN for acknowledgement of the CBU. To summarize the case of Figure 8, the *resolution of freshest BU* procedure is triggered although the BUs arrive in-order at the HA. However, the HA accepts the correct BU (in this case CBU) after *resolution of freshest BU* procedure is performed. So, the correct processing is not influenced. The only impact is that a small delay is introduced before the CBU is accepted. This delay is one round-trip-time (RTT) between HA and MN.

In the following, an optimization of the *resolution of freshest BU* procedure, will be described, said optimization being mainly at the level of the PMA.

Under some circumstances the layer 2 (L2) technology between PMA and MN may not support L2 de-registration. This means when the MN leaves the PMA, for a short time duration the PMA may still have entry in its database where the MN is registered. If the PMA receives a BU resolution query message during this time duration, the PMA would respond positively to the HA, although the MN is away. Therefore the following optimization is suggested, which is illustrated by the flowchart in Figure 9.

According to an embodiment of the invention, if the PMA receives a BU resolution query message for a given MN and the PMA has a valid registration for this MN, the PMA checks if the MN is still attached to the IP link. There are several options to do this. One option is to send a L2 polling message to the MN and obtaining a reply. Another option for the HA is to send Neighbor Solicitation and receive Neighbor Advertisement from the MN. If the PMA determines that the MN is still attached, then the PMA sends a positive PBU (with non-zero lifetime option) to the HA. Otherwise, if the MN is not attached to the PMA, the PMA discards the BU resolution query message.

It is also possible that the PMA always answers to BU resolution query message. Hence, according to a second option, if the MN is registered in the PMA, the PMA answers with a positive BU resolution reply message. If the MN is not anymore attached to the PMA, the PMA answers with a negative BU resolution reply message.

Preferably, the BU resolution query message is implemented by be binding update acknowledgement message with Refresh Advise option. The Refresh Advise option is set to zero which means that the recipient must immediately respond with a binding update. The denotation of this message used in this invention is PBAck[Refr-Adv-Opt=0]. The resulting BU resolution reply message is preferably a CBU or PBU depending who responds to the PBAck[Refr-Adv-Opt=0] message: if the responder is the MN then the BU resolution reply message is CBU and if the responder is PMA, the BU resolution reply message is PBU. A positive BU resolution reply message is a normal CBU or PBU having a lifetime option bigger than zero (i.e. PBU[lifetime>0]). A negative BU resolution reply message is a CBU or PBU having a lifetime option equal to zero (i.e. PBU[lifetime=0]).

Figure 9 shows an exemplary implementation in the PMA for supporting the *resolution of freshest BU* procedure. In the simplest implementation, the PMA checks only the database (BCE), if the MN is registered (has an entry). If the MN has an entry in the BCE list, the PMA sends PBU[lifetime>0] meaning that the binding lifetime in the BCE should be updated with the value in the lifetime option. On contrary, if the MN is not in the BCE, the PMA discards the BU resolution query message. If the PMA is configured to send NAck message (i.e. a deregistration message BU[lifetime=0]), then the PMA sends this message if the MN is not present in BCE list. In MIPv6 the deregistration message is a BU[lifetime=0], which deletes the MN's entry for a given CoA in the HA. Here, the PMA sends PBU[lifetime=0] in order to deregister the proxy binding in the HA with the PMA itself, or with other words, the PMA informs the HA that the MN is not any longer located at this PMA. Optionally, if the MN is present in the BCE list, but the PMA is configured to perform L2 availability check, the PMA performs this check. If the L2 check is positive, than the PMA sends a PBU[lifetime>0]. Otherwise if the L2 check is negative, the PMA performs the same operation as if the MN is not available in the BCE list.

In the following, another embodiment of the invention will be described. If the HA receives CBU or PBU de-registration message this means that the one of both CoAs is not any longer valid. The de-registration process in CMIP-HA is described in section 10.3.2. of "D. Johnson, C. Perkins, J. Arkko, "Mobility Support in IPv6", RFC 3775, June 2004". A binding in the HA may need to be de-registered when the MN returns in the home network or when the PMA detects that the MN has left its area. BU deregistration message is sent in any case when the sending entity (MN or PMA) knows that the CoA is not needed or not valid anymore. Therefore, when the HA receives CBU or PBU deregistration message, the HA should cancel the *BU race condition detection* procedure or *resolution of the freshest BU* procedure. Specifically in case of *BU race condition detection* procedure, the HA may stop measuring the Δt time. In case of *resolution of the freshest BU* procedure, if the HA receives a de-registration message after having sent BU resolution query message and before receiving BU resolution reply message, the HA decides about the validity of the most current BU based on the deregistration message without waiting for BU resolution reply message. For example, if HA has received PBU after a CBU and has started the *resolution of the freshest BU* procedure and receives a de-registration CBU, then the HA decides to accept the PBU and delete its binding from the CBU before BU resolution reply message arrives. Vice versa, if HA has received CBU after a PBU and has started the *resolution of the freshest BU* procedure and receives a de-registration PBU, then the HA decides to accept the CBU and delete the binding from the PBU before BU resolution reply message arrives.

The changes required to be implemented in the HA in order to deploy the solution of this invention will be summarized in the following.

Firstly, the *BU race condition detection* procedure described above should be implemented in the HA. Further, the time parameter "T" as defined above should be configured by the network operator. There are two options of implementing the measurement of the time difference between arrival of BUs of different type. One option is to store the arrival time of every PBU and CBU in the HA. This could be implemented, according to an embodiment, as a new field in the Binding Cache Entry (BCE) in the HA. When a new BU of different type arrives, the HA compares the arrival time of the newest C/PBU and previous C/PBU. Another option would be to implement a timer to measure the time difference in the arrival of BUs of different types. After a C/PBU arrives the timer is started and stopped when the next C/PBU arrives.

Another required change in the HA is the implementation of the *resolution of freshest BU* procedure. Further, the transmission of the binding request message BAck[Refr-Adv-Opt=0] to both CoAs or at least one of the CoAs of the MN should be implemented. The newest BU should be stored by the HA until the *resolution of freshest BU* procedure is completed, and then be discarded.

The changes required at the mobile node and at the PMA will be summarized in the following.

Normally, a node implementing MIP processes a binding acknowledgement (BAck) message only for an outstanding BU. However, the BAck[Refr-Adv-Opt=0] message is a second binding acknowledgement for the same BU received in correspondingly MN or PMA. Therefore, the MIP implementation in MN or PMA should be changed to process a second CBAck or correspondingly PBAck message only if the Refresh Advise option is set to 0 (Refr-Adv-Opt=0). The reason of accepting second C/PBAcks only having option Refr-Adv-Opt=0 is to limit possible security thread where an attacker may want to flood the MN with unnecessary BAcks. One specific example for accepting second CBAck in case of MN is explained in the following. The MN processes only CBAcks having the same sequence number (SN) as outstanding CBUs. Once a CBAck has been processed, the CBU is not anymore outstanding. Therefore, the MN needs to be modified in order to accept a second CBAck for the already acknowledged CBU.

Furthermore, the PMA is changed according to the optimization procedures mentioned above, i.e. sending a negative reply PBU[lifetime=0] to the HA, when the MN is not anymore registered at the PMA. Further, the PMA may be modified to perform polling for the MN each time whether the PMA is not sure about the availability of the MN. In such case of polling, the PMA may send a L2 polling message to the MN and obtain a reply. Another option for the HA is to send Neighbor Solicitation and reception of Neighbor Advertisement from the MN would confirm the attachment of the MN.

There could be a special case, in which both BU resolution query messages got lost for some reason. In such case where no BU resolution reply message to a corresponding BU resolution query message arrives in the HA within a given time, the HA sends the BU resolution query messages again.

According to another embodiment of the invention, the HA does not send the BU resolution message (i.e. BAck) to both CoAs but to only one entity. For example, the HA may send the BAck only to the PMA, which has been last registered in the HA, or with other words the PMA, which sent last PBU. When the PMA receives the BU resolution message, PMA checks whether the requested MN is still registered. If yes, PMA sends a new PBU to the HA. If not, it sends a negative reply back to the HA. The advantage of this variant is that very probably the round trip time between PMA and HA is smaller. Therefore, the HA receives a fast reply by the PMA. For the realization of this variant, it is needed to modify the PMA to always respond to BU resolution message.

Different variants are possible with respect to the resolution of the freshest BU. In the main solution we presented the deployment of binding acknowledgement with Refresh Advise option. This solution is preferred because the response to the BAck is a BU or PBU, which is signed by the sender, so that the home agent authorizes the sender of the message. In this way the solution of freshest binding update resolution doesn't have security threads. Other options for the home agent to poll the sender of the binding update, i.e. the MN and proxy mobility agent, can however be envisaged. Specifically, alternative messages to a BAck can be transmitted, some of which are listed in the following.

The HA may send a Care of Address Test Initiation (CoTi) message to the CoAs of both consecutive binding updates of different types. The entity receiving the CoTi message replies with a CoT message. When the HA receives the CoT message, it determines the sender based on the CoT's source IP address. Consequently, the HA can derive the present location of the mobile node. However, since a CoT message is not signed, it does not offer optimal security, as the HA cannot differentiate an attacker that may include some different CoAs and disturb the MN's data flow. In this respect, the use of this message is considered possible but less preferred than the use of a BAck.

Alternatively, the HA may send an ICMP echo request to both CoAs or to at least one of the CoAs. Depending on the received reply, the HA can determine the validity of the current CoA. However, it is possible that firewalls filter or discard the ICMP messages in order to avoid flooding attacks. In this respect, the use of this message is considered possible but less preferred than the use of a BAck.

According to another embodiment of the invention, the principles described with respect to the embodiments of the invention above may be used in the case of a handover of a mobile node between two PMA's within a PMIP domain. The solution described in this invention targets the problem to choose the freshest BU when the BUs are not directly comparable because they contain either sequence number (CBU) or timestamp (PBU). However, the solution may also be applied to distinguish between PBUs when they come from different PMAs, which are not time synchronized. This may occur when the MN moves between PMIP domains that are not time synchronized. In this case consecutive PBUs coming from both PMIP domains have timestamp option, but the timestamp is not sufficient to decide about the PBU freshness. In such cases, first the HA should know (e.g. through pre-configuration) about the missing time synchronization of the PMAs sending the PBUs. Second, the HA treats the PBUs coming from those non-synchronized PMAs as BUs from different type. If the *BU race condition detection* procedure detects race condition, than the HA triggers the *resolution of freshest BU* procedure.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

## Claims

1. A method for managing the mobility of a mobile node (MN) at a mobile anchor point, said mobile node (MN) moving between a first network and a second network, wherein said first network uses a mobile node (MN)-based mobility management scheme for managing the mobility of the mobile node (MN), and said second network uses a network-based mobility management scheme for managing the mobility of the mobile node (MN), said mobile anchor point implementing both the mobile node (MN)-based mobility management scheme and the network-based mobility management scheme, said method comprising the following steps executed by the mobile anchor point:
receiving a first message from the mobile node (MN) on a first location of the mobile node (MN) in the first network, where the mobile node (MN) has a first IP address,
receiving a second message from a network element in the second network on a second location of the mobile node (MN) in the second network, where the mobile node (MN) has a second IP address,
transmitting a binding request message to at least one of the first and second IP address of the mobile node (MN),
receiving a response message for the at least one of the first and second IP address, and
determining which one of the first and second IP address is a current IP address of the mobile node (MN) based on the received response message.

2. A method for managing the mobility of a mobile node (MN) at a mobile anchor point, said mobile node (MN) moving between a first network and a second network, wherein said first and second network use a network-based mobility management scheme for managing the mobility of the mobile node (MN), said mobile anchor point implementing the network-based mobility management scheme, said method comprising the following steps executed by the mobile anchor point:
receiving a first message from a first network element in the first network on a first location of the mobile node (MN) in the first network, where the mobile node (MN) has a first IP address,
receiving a second message from a second network element in the second network on a second location of the mobile node (MN) in the second network, where the mobile node (MN) has a second IP address,
transmitting a binding request message to at least one of the first and second IP address of the mobile node (MN),
receiving a response message for the at least one of the first and second IP address, and
determining which one of the first and second IP address is a current IP address of the mobile node (MN) based on the received response message.

3. The method according to claim 1 or 2, wherein the at least one of the first and second IP address is determined as the current IP address of the mobile node (MN) if the received response message is a positive response message for the at least one of the first and second IP address.

4. The method according to claim 3, wherein the positive response message is a binding update message having a non-zero lifetime.

5. The method according to claim 1 or 2, wherein the other one of the at least one of the first and second IP address is determined as the current IP address of the mobile node (MN) if the received response message is a negative response message for the at least one of the first and second IP address.

6. The method according to one of claims 1 to 5, further comprising measuring a time interval between the reception of the first and second message,
wherein said binding request message is transmitted to at least one of the first and second IP address of the mobile node (MN) when the measured time interval is smaller than a predetermined time duration.

7. The method according to claim 6, wherein the predetermined time duration is larger than or equal to a minimum time duration necessary in a handover of the mobile node (MN) between the first and second network.

8. The method according to one of claims 1 to 7, wherein the first IP address is a first care-of-address configured for the mobile node (MN) in the first network, and the second IP address is a second care-of-address configured for the mobile node (MN) in the second network.

9. The method according to one of claims 1 to 8, further comprising calculating a time difference between a first time of arrival of the first message at the mobile anchor point and a second time of arrival of the second message at the mobile anchor point.

10. The method according to one of claims 1 to 9, wherein the mobile anchor point is a home agent for the mobile node (MN), said method further comprising:
storing the IP address of the earliest received one of the first and second message, preferentially in a binding cache entry of the home agent, and
storing the IP address of the latest received one of the first and second message until reception of the binding update message.

11. The method according to claim 10, wherein the binding request message is transmitted to the stored IP address of the earliest received one of the first and second message and to the stored IP address of the latest received one of the first and second message.

12. The method according to claim 10 or 11, further comprising deleting the stored IP address of the latest received one of the first and second message upon reception of the binding update message, and
updating the stored IP address of the earliest received one of the first and second message by the one of the first and second IP address contained in the received binding update message.

13. The method according to claim 12, further comprising updating a timer lifetime of the binding cache entry when the one of the first and second IP address contained in the received binding update message corresponds to the stored IP address of the earliest received one of the first and second message.

14. The method according to one of claims 1 to 13, wherein the binding request message is at least one of a binding acknowledgment message, a care-of-address test initiation message or an Internet Control Message Protocol (ICMP) message.

15. The method according to one of claims 1 to 14, wherein the binding request message is a binding acknowledgment message, and said method further comprises setting a refresh advise option of the binding acknowledgment message to zero before transmitting the binding acknowledgment message.

16. The method according to claim 15, further comprising transmitting, by the mobile node (MN) or the network element, a binding update to the mobile anchor point upon reception of a binding request message with a refresh advise option set to zero.

17. The method according to one of claims 1 to 16, further comprising:
receiving, by the network element, the binding request message from the mobile anchor point,
checking, by the network element, an attachment of the mobile node (MN) to the network element, and
transmitting, by the network element, a binding update to the mobile anchor point if the mobile node (MN) is attached to the network element, or discarding, by the network element, the binding request message if the mobile node (MN) is not attached to the network element.

18. The method according to one of claims 1 to 16, further comprising:
receiving, by the network element, the binding request message from the mobile anchor point,
checking, by the network element, an attachment of the mobile node (MN) to the network element, and
transmitting, by the network element, a binding update having a lifetime longer than zero if the mobile node (MN) is attached to the network element, or a binding update having a lifetime equal to zero if the mobile node (MN) is not attached to the network element.

19. The method according to claim 17 or 18, wherein the checking step comprises transmitting, by the network element, at least one of a layer 2 polling message or a neighbour solicitation message to the mobile node (MN).

20. The method according to one of claims 1 to 19, further comprising:
receiving, by the mobile anchor point, a binding de-registration message from the mobile node (MN) or the network element for one of the first and second IP address of the mobile node (MN), and
determining, by the mobile anchor point, that the other one of the first and second IP address of the mobile node (MN) is the current IP address of the mobile node (MN) upon reception of the binding de-registration message.

21. The method according to claim 20, further comprising stopping the transmission of the binding request message upon reception of the binding de-registration message.

22. The method according to claim 20, wherein, when the binding de-registration message for one of the first and second IP address of the mobile node (MN) is received after the transmission of the binding request message and before the reception of a response message, said method further comprises determining that the other one of the first and second IP address of the mobile node (MN) is the current IP address of the mobile node (MN) without waiting for the reception of the response message.

23. A mobile anchor point for managing the mobility of a mobile node (MN), said mobile node (MN) moving between a first network and a second network, wherein said first network uses a mobile node (MN)-based mobility management scheme for managing the mobility of the mobile node (MN), and said second network uses a network-based mobility management scheme for managing the mobility of the mobile node (MN), said mobile anchor point implementing both the mobile node (MN)-based mobility management scheme and the network-based mobility management scheme, and said mobile anchor point comprising:
receiving means for receiving a first message from the mobile node (MN) on a first location of the mobile node (MN) in the first network, where the mobile node (MN) has a first IP address, and a second message from a network element in the second network on a second location of the mobile node (MN) in the second network, where the mobile node (MN) has a second IP address, and
transmitting means for transmitting a binding request message to at least one of the first and second IP address of the mobile node (MN),
wherein said receiving means are adapted to receive a response message for the at least one of the first and second IP address, and
said mobile anchor point further comprises determining means for determining which one of the first and second IP address is a current IP address of the mobile node (MN) based on the received response message.

24. A mobile anchor point for managing the mobility of a mobile node (MN), said mobile node (MN) moving between a first network and a second network, wherein said first and second network use a network-based mobility management scheme for managing the mobility of the mobile node (MN), said mobile anchor point implementing the network-based mobility management scheme, and said mobile anchor point comprising:
receiving means for receiving a first message from a first network element in the first network on a first location of the mobile node (MN) in the first network, where the mobile node (MN) has a first IP address, and a second message from a second network element in the second network on a second location of the mobile node (MN) in the second network, where the mobile node (MN) has a second IP address, and
transmitting means for transmitting a binding request message to at least one of the first and second IP address of the mobile node (MN),
wherein said receiving means are adapted to receive a response message for the at least one of the first and second IP address, and
said mobile anchor point further comprises determining means for determining which one of the first and second IP address is a current IP address of the mobile node (MN) based on the received response message.

25. The mobile anchor point according to claim 23 or 24, wherein said determining means are adapted to determine the at least one of the first and second IP address as the current IP address of the mobile node (MN) if the received response message is a positive response message for the at least one of the first and second IP address.

26. The mobile anchor point according to claim 25, wherein the positive response message is a binding update message having a non-zero lifetime.

27. The mobile anchor point according to claim 23 or 24, wherein said determining means are adapted to determine the other one of the at least one of the first and second IP address as the current IP address of the mobile node (MN) if the received response message is a negative response message for the at least one of the first and second IP address.

28. The mobile anchor point according to one of claims 23 to 27, further comprising measuring means for measuring a time interval between the reception of the first and second message,
wherein said transmitting means are adapted to transmit the binding request message to at least one of the first and second IP address of the mobile node (MN) when the measured time interval is smaller than a predetermined time duration.

29. The mobile anchor point according to one of claims 23 to 28, wherein said receiving means are adapted to receive a binding de-registration message from the mobile node (MN) or the network element for one of the first and second IP address of the mobile node (MN), and
said determining means are adapted to determine that the other one of the first and second IP address of the mobile node (MN) is the current IP address of the mobile node (MN) upon reception of the binding de-registration message.

30. The mobile anchor point according to claim 29, wherein said mobile anchor point is adapted to stop the transmission of the binding request message upon reception of the binding de-registration message.

31. The mobile anchor point according to claim 29, wherein, when the binding deregistration message for one of the first and second IP address of the mobile node (MN) is received after the transmission of the binding request message and before the reception of a response message, said determining means are adapted to determine that the other one of the first and second IP address of the mobile node (MN) is the current IP address of the mobile node (MN) without waiting for the reception of the response message.

32. The mobile anchor point according to one of claims 23 to 31, wherein said mobile anchor point is adapted to execute the method steps according to one of claims 7 to 15.

33. A mobile node moving between a first network and a second network, wherein said first network uses a mobile node (MN)-based mobility management scheme for managing the mobility of the mobile node (MN), and said second network uses a network-based mobility management scheme for managing the mobility of the mobile node (MN), said mobile node (MN) comprising:
transmitting means for transmitting to a mobile anchor point for the mobile node (MN) a message on a location of the mobile node (MN) in the first network, where the mobile node (MN) has a first IP address, and
receiving means for receiving from the mobile anchor point a binding request message for the first IP address of the mobile node (MN),
wherein said transmitting means are adapted to transmit to the mobile anchor point a response message to the received binding request message.

34. The mobile node according to claim 33, wherein said transmitting means are adapted to transmit a binding update to the mobile anchor point upon reception of a binding request message with a refresh advise option set to zero.

35. A network element in a network using a network-based mobility management scheme for managing the mobility of a mobile node (MN),said network element comprising:
transmitting means for transmitting to a mobile anchor point for the mobile node (MN) a message on a location of the mobile node (MN) in the network, where the mobile node (MN) has an IP address, and
receiving means for receiving from the mobile anchor point a binding request message for the IP address of the mobile node (MN),
wherein said transmitting means are adapted to transmit to the mobile anchor point a response message to the received binding request message.

36. The network element according to claim 35, wherein said transmitting means are adapted to transmit a binding update to the mobile anchor point upon reception of a binding request message with a refresh advise option set to zero.

37. The network element according to claim 35 or 36, further comprising checking means for checking an attachment of the mobile node (MN) to the network element,
wherein said network element is adapted to transmit a binding update to the mobile anchor point if the mobile node (MN) is attached to the network element, or to discard the binding request message if the mobile node (MN) is not attached to the network element.

38. The network element according to claim 35 or 36, further comprising checking means for checking an attachment of the mobile node (MN) to the network element,
wherein said network element is adapted to transmit a binding update having a lifetime longer than zero if the mobile node (MN) is attached to the network element, or a binding update having a lifetime equal to zero if the mobile node (MN) is not attached to the network element.

39. The network element according to claim 37 or 38, wherein the checking means is adapted to transmit at least one of a layer 2 polling message or a neighbour solicitation message to the mobile node (MN).
